# EUROPÄISCHE PATENTANMELDUNG

(11) **EP 4 552 770 A1**
(43) Veröffentlichungstag der Anmeldung: **14.05.2025**
(21) Anmeldenummer: 23208952.4
(22) Anmeldetag: 10.11.2023
(51) Int. Cl.: B22F 3/24, B21D 53/02, B22F 5/10, B22F 10/28, B22F 10/60, B23K 20/12, B33Y 10/00, B33Y 40/20, B33Y 80/00, F28D 15/02, G06F 1/20, H01B 17/00, H01B 17/36

(54) **BAUTEIL MIT GASDICHT ABGESCHLOSSENER KAVITÄT**

(71) Anmelder: Siemens Aktiengesellschaft, 80333 München (DE)
(72) Erfinder: Kiener, Christoph, 81369 München (DE)
(74) Vertreter: Siemens Patent Attorneys

(57) **Zusammenfassung**

Es wird ein Verfahren zur Herstellung eines Bauteils (10) mit einer gasdicht abgeschlossenen Kavität (20) angegeben. Das Verfahren umfasst die folgenden, in dieser Reihenfolge nacheinander ausgeführten Schritte:
a) Herstellen wenigstens einer Begrenzungswand (30) der Kavität (20) mittels eines additiven Herstellungsverfahrens, wobei die Begrenzungswand (30) einen Verschlussbereich (33) mit einer rotationssymmetrischen Öffnung (34) aufweist,
b) Evakuieren der Kavität (20) über die Öffnung (34),
c) Einsetzen eines rotationssymmetrischen Verschlusselements (40) in die Öffnung (34) und Herstellen einer stoffschlüssigen Verbindung (42) zwischen Verschlusselement (40) und Begrenzungswand (20) durch Reibschweißen, so dass ein dauerhaft gasdichter Verschluss der Kavität (20) gebildet wird. Weiterhin wird ein entsprechendes Bauteil (10) angegeben sowie ein Computerprogrammprodukt zur Auslegung eines solchen Bauteils (10).

## Beschreibung

Die vorliegende Erfindung betrifft ein Verfahren zur Herstellung eines Bauteils mit einer gasdicht abgeschlossenen Kavität, wobei wenigstens eine Begrenzungswand der Kavität additiv hergestellt wird. Weiterhin betrifft die Erfindung ein solches Bauteil sowie ein Computerprogrammprodukt zur computergestützten Auslegung eines solchen Bauteils.

Aus dem Stand der Technik sind unterschiedliche Arten von Bauteilen mit gasdicht abgeschlossenen Kavitäten bekannt. Eine solche Kavität kann beispielsweise als thermisch isolierender Vakuumraum dienen oder einen Medienraum eines Wärmerohr-Systems bilden. Bei den genannten Anwendungen ist jeweils ein dauerhaft gasdichter Verschluss der Kavität wichtig. So ist bei einem thermisch isolierenden Vakuumraum eine Aufrechterhaltung eines dauerhaft niedrigen Gasdrucks im Inneren erforderlich, um einen Wärmetransport durch die Konvektion von Gasmolekülen weitgehend zu unterbinden. Bei einem herkömmlichen Bauteil mit einem innenliegenden Vakuumraum wird meist ein metallisches Material einer Begrenzungswand in einem Verschlussbereich abgeschmolzen, um einen vakuumdichten Verschluss zu erzeugen, nachdem das Vakuum gezogen worden ist (also nachdem das in der Kavität vorliegende Gas durch eine entsprechende Öffnung in dem Verschlussbereich abgesaugt wurde) .

Bei einem Wärmerohr-System wird die Kavität meistens auch zunächst evakuiert und anschließend mit dem gewünschten Arbeitsmedium befüllt. Hierbei ist es wesentlich, dass beim Betrieb kein anderes Fluid als dieses Arbeitsmedium in der Kavität enthalten ist, da sich sonst z.B. eine Inertgasschicht oder ein Flüssigkeitsfilm aus dem unerwünschten Stoff vor dem Kondensatorbereich aufbauen kann, wodurch die Zufuhr von gasförmigem Arbeitsmedium zum Kondensatorbereich verringert wird und die Wärmetransportleistung sinkt. Auch hier ist also eine dauerhaft gasdichte Abdichtung der Kavität wesentlich, um über lange Betriebszeiten hinweg eine hohe Effizienz des Wärmerohr-Systems aufrechtzuerhalten. Hierzu kann beispielsweise nach der Befüllung mit dem Arbeitsmedium eine mechanische Verklemmung oder ein Abschmelzen einer für die Befüllung verwendeten Öffnung erfolgen.

Bauteile der genannten Art werden heutzutage zunehmend mit additiven Herstellungsverfahren gefertigt. Ein solches additives Herstellungsverfahren wird häufig auch als generative Fertigung, auf Englisch als "additive Manufacturing" oder landläufig als "3D-Druck" bezeichnet. Eine additive Herstellung ermöglicht insbesondere eine einfache Erzeugung von komplexen, innenliegenden Strukturen auf engem Raum, wobei auch feine Gitter, Kapillarstrukturen und in sich verschachtelte Strukturen realisiert werden können, die mit herkömmlichen Verfahren nicht herstellbar sind. Bei additiv hergestellten Bauteilen mit innenliegender Kavität ist die dauerhaft gasdichte Abdichtung oft vergleichsweise schwierig zu erreichen, da die eingesetzten Materialien häufig spröde und/oder porös sind und/oder vergleichsweise hohe Schmelzpunkte aufweisen. Außerdem sind die additiv hergestellten Bauteile häufig so filigran strukturiert, dass kein ausreichend großer Verschlussbereich für ein Abschmelzen oder ein mechanisches Verklemmen zur Verfügung steht.

Aufgabe der Erfindung ist es daher, ein Herstellungsverfahren für ein Bauteil der eingangs genannten Art anzugeben, welches die genannten Schwierigkeiten überwindet. Insbesondere soll ein Verfahren zur Verfügung gestellt werden, welches auf einfache Weise eine dauerhaft gasdichte Abdichtung der Kavität nach ihrer Evakuierung bzw. nach ihrer Befüllung mit dem gewünschten Arbeitsmedium ermöglicht. Eine weitere Aufgabe ist es, ein entsprechendes Bauteil mit einer gasdicht abgeschlossenen Kavität anzugeben. Weiterhin soll ein Computerprogrammprodukt zur computergestützten Auslegung eines solchen Bauteils zur Verfügung gestellt werden.

Diese Aufgaben werden durch das in Anspruch 1 beschriebene Verfahren, das in Anspruch 14 beschriebene Bauteil und das in Anspruch 15 beschriebene Computerprogrammprodukt gelöst.

Das erfindungsgemäße Verfahren dient zur Herstellung eines Bauteils mit einer gasdicht abgeschlossenen Kavität. Es umfasst die folgenden Schritte, welche insbesondere in dieser Reihenfolge ausgeführt werden:
a) Herstellen wenigstens einer Begrenzungswand der Kavität mittels eines additiven Herstellungsverfahrens, wobei die Begrenzungswand einen Verschlussbereich mit einer rotationssymmetrischen Öffnung aufweist,
b) Evakuieren der Kavität über die Öffnung,
c) Einsetzen eines rotationssymmetrischen Verschlusselements in die Öffnung und Herstellen einer stoffschlüssigen Verbindung zwischen Verschlusselement und Begrenzungswand durch Reibschweißen, so dass ein dauerhaft gasdichter Verschluss der Kavität gebildet wird.

Unter dem Begriff "additives Herstellungsverfahren" wird hier gemäß der Industrienorm ASTM F2792 allgemein ein Prozess verstanden, bei dem Material sequentiell aufgetragen wird und jeweils mit vorhergehenden Materialbereichen so verbunden wird, dass ein dreidimensionaler Formkörper nach einem vordefinierten dreidimensionalen geometrischen Modell erzeugt werden kann. Dies steht im Gegensatz zu den herkömmlichen subtraktiven Fertigungsverfahren, bei denen ein dreidimensionaler Formkörper durch Entfernung von Material aus einem Rohling (beispielsweise durch Fräsen, Schleifen und/oder Bohren) erhalten wird. Dabei soll jedoch generell nicht ausgeschlossen sein, dass auch ein additiv gefertigter Formkörper in einem späteren Verfahrensschritt noch subtraktiv nachbearbeitet wird (z.B. durch Abschleifen seiner Oberflächen und/oder Entfernen von Stützstrukturen). Die additive Erzeugung des Formkörpers findet häufig, jedoch nicht notwendigerweise, mittels sequentieller Auftragung einzelner Schichten statt. Bei einer drahtbasierten additiven Fertigung ist z.B. ein sequentieller Schichtaufbau nicht immer vorhanden.

Das Bauteil enthält also eine gasdicht abgeschlossene Kavität, und in Schritt a) des erfindungsgemäßen Verfahrens wird zumindest eine Begrenzungswand dieser Kavität additiv hergestellt. Vorteilhaft kann in diesem Schritt der überwiegende Teil des herzustellenden Bauteils additiv hergestellt werden, insbesondere der Teilbereich des Bauteils, in welchem die Kavität ausgebildet wird und optional sogar der gesamte Grundkörper des Bauteils (also das Bauteil ohne das einzusetzende Verschlusselement). Durch die additive Herstellung werden komplexe Strukturen innerhalb des Bauteils ermöglicht, z.B. Gitterstrukturen zur Erreichung einer hohen Druckfestigkeit bei vergleichsweise geringem Materialeinsatz und/oder Kapillarstrukturen zum kapillaren Transport eines optional vorliegenden fluiden Arbeitsmediums.

Die Begrenzungswand weist einen Verschlussbereich mit einer Öffnung auf, so dass in Schritt b) die Kavität über diese Öffnung evakuiert werden kann. Optional kann die Kavität im Anschluss an die Evakuierung wieder mit einem Arbeitsmedium befüllt werden. Vorteilhaft wird jedenfalls die in der Kavität gegebenenfalls vorhandene Luft in diesem Schritt b) entfernt. Das hier in der Kavität bewirkte Vakuum muss kein besonders gutes Vakuum sein. So kann es z.B. ausreichend sein, wenn in diesem Schritt ein Grobvakuum erreicht wird, wobei der Gasdruck innerhalb der Kavität auf einen Wert unterhalb von 300 mbar reduziert wird. Besonders vorteilhaft kann hier jedoch auch ein Feinvakuum unterhalb von 1 mbar erreicht werden oder sogar ein Hochvakuum.

Die Öffnung der Begrenzungswand ist rotationssymmetrisch, so dass in Schritt c) ein rotationssymmetrisches Verschlusselement in diese Öffnung eingesetzt werden kann. Das Verschlusselement soll derart zu der Öffnung passen, dass es nach Art eines Stöpsels in diese eingesetzt werden kann. Dabei kann jedoch unter Umständen eine leichte Deformation des Verschlusselements und/oder der Öffnung nötig sein, um eine genaue Passung zu erreichen. Mit anderen Worten müssen die Innenkontur der Öffnung und die Außenkontur des Verschlusselements einander nicht exakt entsprechen.

Der gasdichte Verschluss zwischen dem eingesetzten Verschlusselement und der umgebenden Begrenzungswand wird gemäß der Erfindung durch ein Reibschweiß-Verfahren erzeugt, wobei eine stoffschlüssige Verbindung zwischen den genannten Teilen gebildet wird. Das Reibschweiß-Verfahren ist ein Schweißverfahren aus der Gruppe des Pressschweißens. Hierbei werden die zu fügenden Teile unter Druck relativ zueinander bewegt, wobei sich die Teile an den Kontaktflächen berühren. Durch die freigesetzte Reibungswärme kommt es zu einer Plastifizierung des Materials der zu fügenden Teile im Kontaktbereich. Am Ende des Reibvorgangs wird die Relativbewegung gestoppt, und es wird in der Endposition ein hoher Anpressdruck ausgeübt. Hierbei wird die stoffschlüssige Verbindung zwischen den beiden Teilen ausgebildet. Im Vergleich zu anderen Schweißverfahren ist die Wärmeeinflusszone deutlich kleiner, und es kommt nicht zur Bildung einer ausgedehnten Schmelze in der Fügezone, sondern nur zu einer Plastifizierung der beteiligten Materialien in den jeweiligen oberflächennahen Bereichen.

Die Verbindung zwischen dem rotationssymmetrischen Verschlusselement und der umgebenden Begrenzungswand mit ihrer rotationssymmetrischen Öffnung wird insbesondere durch Rotations-Reibschweißen erzeugt. Hierbei wird zweckmäßigerweise das Verschlusselement um seine Symmetrieachse gedreht und dabei in axialer Richtung auf die Öffnung in der Begrenzungswand zu bewegt. Die Bezeichnung "axial" soll sich im Folgenden allgemein auf diese Rotations- und Symmetrieachse beziehen. Diese Art von Verfahren wird in der Fachwelt auch mit dem englischen Begriff "Friction Plug Welding (FPW)" bezeichnet und ist in der Veröffentlichung "Characteristics of Friction Plug Joints for AA2219-T87 FSW Welds" von Z. Sun, X.

Yang und S. Li in Materials 2022, 15, 1525 ausführlich beschrieben. Zweckmäßig wird das Verschlusselement bereits während der Rotation mit einer axialen Anpresskraft in die Öffnung gedrückt, wobei auch eine plastische Verformung des Verschlusselements und/oder der Begrenzungswand erfolgen kann. Durch eine solche Verformung kann eine verbesserte Passung der beiden zu fügenden Teile erreicht werden, falls z.B. ihre Kegelwinkel vor dem Fügen leicht unterschiedlich waren. Dabei kann es gegebenenfalls zu einer Extrusion von Teilen des Materials des Verschlusselements durch die Öffnung kommen. Nach dem Anhalten der Rotation wird die axiale Anpresskraft deutlich erhöht, so dass es im stationären Zustand des Verschlusselements zur Ausbildung einer gasdichten stoffschlüssigen Verbindung kommt.

Ein Vorteil des erfindungsgemäßen Verfahrens liegt darin, dass auf einfache Weise ein dauerhaft gasdichter Verschluss einer Kavität gebildet werden kann, ohne dass die umliegenden Bereiche des Bauteils einer hohen thermischen Belastung ausgesetzt sind. Insbesondere muss das Bauteil nicht über die Schmelztemperatur der vorliegenden Materialien erhitzt werden. Ein weiterer wesentlicher Vorteil ist darin zu sehen, dass der Platzbedarf für den Verschlussbereich sehr gering gehalten werden kann, da hier keine Abquetsch-Zone vorgesehen werden muss und auch keine Sicherheitsabstände zu einer Schmelz-Zone eingehalten werden müssen. Weiterhin kann die beim Schweißvorgang auftretende mechanische Belastung infolge der axialen Anpresskraft an die Belastbarkeit der additiv hergestellten Begrenzungswand angepasst werden (und umgekehrt). Falls die Begrenzungswand vergleichsweise dünn ausgebildet ist, kann z.B. die mechanische Belastbarkeit gegebenenfalls durch ein zusätzliches in der Kavität liegendes Stützgitter erhöht werden.

Das erfindungsgemäße Bauteil weist eine gasdicht abgeschlossenen Kavität auf, welche von wenigstens einer Begrenzungswand begrenzt wird. Zumindest die Begrenzungswand der Kavität ist mittels eines additiven Herstellungsverfahrens hergestellt. Die Begrenzungswand weist einen Verschlussbereich mit einer rotationssymmetrischen Öffnung auf. In diese Öffnung ist ein rotationssymmetrisches Verschlusselement eingesetzt und mit der umgebenden Begrenzungswand durch eine Reibschweiß-Verbindung gasdicht verbunden. Dabei ist der Innenraum der Kavität entweder evakuiert oder mit einem Arbeitsmedium befüllt. Die Vorteile des erfindungsgemäßen Bauteils ergeben sich analog zu den beschriebenen Vorteilen des erfindungsgemäßen Verfahrens.

Das erfindungsgemäße Computerprogrammprodukt umfasst Befehle, wobei die Befehle einen Computer bei der Ausführung des Computerprogrammprodukts dazu veranlassen, ein Verfahren zur Auslegung eines Bauteils nach Anspruch 14 auszuführen, wobei das Auslegungsverfahren die folgenden Schritte umfasst:
a) Bereitstellung eines physikalischen Modells für das Bauteil,
b) Festlegung eines Auslegungs-Parametersatzes mit wenigstens einem variablen geometrischen Auslegungs-Parameter für das Bauteil,
c) Festlegung von einem Zielwert für wenigstens eine physikalische Eigenschaft des Bauteils,
d) computergestützte Durchführung von wenigstens einer Simulation unter Verwendung des physikalischen Modells, wobei die wenigstens eine physikalische Eigenschaft des Bauteils in Abhängigkeit des Auslegungs-Parametersatzes berechnet wird,
d) Bestimmung von wenigstens einem geeigneten Auslegungs-Parametersatz im Hinblick auf die Erreichung des Zielwertes für die wenigstens eine physikalische Eigenschaft auf Basis der Simulation.

Die Vorteile des erfindungsgemäßen Computerprogrammprodukts liegen darin, dass sich die Auslegungs-Parameter damit computergestützt so festlegen lassen, dass der wenigstens eine Zielwert erreicht wird. Insbesondere kann ein günstiger Auslegungs-Parametersatz im Hinblick auf die gleichzeitige Erreichung bzw. Optimierung mehrerer Zielwerte aufgefunden werden. Hierzu kann in Schritt a) insbesondere ein digitales dreidimensionales Modell bereitgestellt werden. Dieses physikalische Modell kann z.B. geometrische, mechanische und thermische Zusammenhänge beschreiben. Die in Schritt b) festgelegten Auslegungs-Parameter können beispielsweise Wandstärke(n) der Begrenzungswand und ggf. weiterer optionaler Elemente im Verschlussbereich beinhalten. Weiterhin können ein Durchmesser der Öffnung, ein Durchmesser des Verschlusselements, eine axiale Länge einer Öffnungstülle bzw. des Verschlusselements, ein Kegelwinkel der Öffnung bzw. des Verschlusselements und/oder Materialparameter von Verschlusselement bzw. Begrenzungswand enthalten sein. Alternativ oder zusätzlich können auch Prozessparameter wie eine Rotationsgeschwindigkeit beim Reibschweißen, eine Vorschubstrecke, eine Anpresskraft bei der Rotation und/oder eine Anpresskraft nach dem Stillstand enthalten sein.

Als Randbedingungen für die Auslegung können bestimmte Designvorgaben enthalten sein (sogenannte Design Rules), welche z.B. in Abhängigkeit des gewählten additiven Fertigungsverfahrens bestimmte Grenzwerte für Wandstärken, Dicken von Gitterstreben und/oder Winkel von einzelnen Designelementen enthalten können. Diese Designvorgaben können feste Randbedingungen für die in b) festgelegten Auslegungs-Parameter bilden.

Die Festlegung des wenigstens einen Zielwerts in Schritt c) kann insbesondere durch eine Benutzer-Eingabe erfolgen, und es können beispielsweise mehrere Zielwerte angeben werden, wobei einerseits für bestimmte Eigenschaften starre Grenzen als feste Randbedingungen angegeben werden können und andererseits für manche Eigenschaften auch nur die Richtung einer gewünschten Optimierung angegeben werden kann (d.h. Minimierung oder Maximierung). Die mit dem Zielwert verknüpfte wenigstens eine physikalische Eigenschaft kann beispielsweise eine mechanische Belastung des Bauteils bzw. bestimmter Teilelemente beim Prozess sein und/oder eine beim Reibschweißen ausgebildete Prozesstemperatur im Verbindungsbereich bzw. in dessen Umgebung und/oder eine andere für die Anwendung relevante physikalische Größe.

Bei der Bestimmung von wenigstens einem geeigneten Auslegungs-Parametersatz wird zum einen sichergestellt, dass die vorgegebenen festen Grenzwerte eingehalten werden, und zum anderen kann eine Optimierung im Hinblick auf ein oder mehrere in Schritt c) festgelegte physikalische Eigenschaften erfolgen. In jedem Fall wird durch das erfindungsgemäße Computerprogrammprodukt ein Werkzeug zur Verfügung gestellt, mit dem ein Designer eines erfindungsgemäßen Bauteils computergestützt und mit vergleichsweise geringem Aufwand zu einer günstigen Auslegung des Bauteils im Hinblick auf die relevanten mechanischen und/oder thermischen Eigenschaften gelangen kann. Unter Verwendung der für das verwendete additive Herstellungsverfahren maßgeblichen Libraries kann somit eine Zielgeometrie für das herzustellende Bauteil (z.B. als CAD-Datensatz) computergestützt und automatisiert erzeugt werden. Auch das entsprechende Verfahren zur Auslegung des Bauteils ist daher Teil der vorliegenden Erfindung.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Fertigungsverfahrens auch bei dem Bauteil bzw. dem Computerprogrammprodukt realisiert werden, und umgekehrt.

So kann die Begrenzungswand aus einem metallischen Material gebildet werden und das Verschlusselement kann ebenfalls aus einem metallischen Material bestehen. Mit anderen Worten kann eine Reibschweiß-Verbindung zwischen zwei metallischen Fügepartnern zur Abdichtung der Kavität erzeugt werden. Vorteilhaft können die Begrenzungswand und das Verschlusselement aus einem gleichartigen Material gebildet sein, was die Ausbildung einer gasdichten Verbindung erleichtert. Alternativ ist aber auch die Ausbildung einer gasdichten Verbindung zwischen verschiedenartigen Materialien mit dem Reibschweißverfahren möglich.

Bei dem angewandten additiven Herstellungsverfahren kann es sich allgemein um ein pulverbettbasiertes Verfahren handeln. Hiermit sind auf einfache Weise auch komplexe metallische Strukturen herstellbar. Geeignete Verfahren sind beispielsweise selektives Laserschmelzen (SLM) bzw. Laser Powder Bed Fusion (LPBF), selektives Lasersintern (SLS), Metal Binder Jetting, oder Electron Beam Melting (EBM). In einer anderen Ausgestaltungsform ist das additive Verfahren aus der Kategorie des energiegelenkten Materialauftrags, auf Englisch auch als Directed Energy Deposition bezeichnet, ein drahtbasiertes Verfahren wie z.B. das Wire Arc Additive Manufacturing (WAAM) oder das Laser-Metallpulver-Düse-Verfahren, bzw. Laser Engineered Net Shaping (LENS). In einer anderen Ausgestaltungsform ist das additive Verfahren ein pastenbasiertes Sintermetallverfahren wie z.B. Mold Jetting. Pulver- und drahtbasierte Verfahren sind hierbei besonders geeignet, um Bauteile mit besonders druckfesten Kavitäten zu erzeugen. Gemäß einer vorteilhaften Ausführungsform kann auch das Verschlusselement additiv hergestellt sein. Dabei kann das Verschlusselement z.B. aus artgleichem Material gebildet sein wie die Begrenzungswand, was die Ausbildung homogener Eigenschaften im Verschlussbereich fördert. Alternativ oder zusätzlich kann das Verschlusselement auch mit dem gleichen additiven Herstellungsverfahren gebildet sein wie das übrige Bauteil, insbesondere sogar in einem gemeinsamen Fertigungsschritt innerhalb derselben Fertigungseinrichtung.

Gemäß einer ersten vorteilhaften Ausführungsvariante der gasdicht abgeschlossenen Kavität kann diese eine Vakuumkammer sein. Entsprechend liegt bei der Herstellung des Bauteils während des Einsetzens des Verschlusselements in die Öffnung und während des Herstellens der stoffschlüssigen Verbindung innerhalb der Kavität ein Vakuum an. Mit anderen Worten wird zwischen der Evakuierung in Schritt b) und der Bildung des Verschlusses in Schritt c) kein anderer Stoff in die Kavität eingefüllt. Die Vakuumkammer kann beispielsweise zur thermischen Isolation dienen. Beispielsweise kann es sich um einen Vakuummantel handeln, um innere Bereiche des Bauteils gegen eine wärmere oder kältere äußere Umgebung zu isolieren. Alternativ können auch unterschiedlich temperierte Bereiche des Bauteils durch eine dazwischenliegende Vakuumkammer thermisch gegeneinander isoliert werden oder das Bauteil als solches kann im Wesentlichen als Wärmeisolator dienen, so dass gegenüberliegende Bereiche der äußeren Umgebung durch die Vakuumkammer thermisch voneinander getrennt sind. Es sind jedoch auch viele andere Anwendungen von Vakuumkammern denkbar, z.B. als Vakuumraum einer Elektronenröhre.

Gemäß einer zweiten vorteilhaften Ausführungsvariante der gasdicht abgeschlossenen Kavität kann diese eine Medienkammer sein. Das heißt, sie ist im fertigen Zustand des Bauteils mit einem Arbeitsmedium befüllt. Entsprechend wird bei dieser Ausführungsvariante des Verfahrens nach Schritt b) und vor Schritt c) ein Arbeitsmedium in die Kavität eingefüllt. Vorteilhaft kann es sich bei dem Arbeitsmedium um ein fluides Arbeitsmedium handeln, wobei bei der Anwendung des Bauteils auch Phasenübergänge zum Tragen kommen können. Beispielsweise kann bei dieser Variante die Kavität eine Dampfkammer sein, in der sich zumindest ein gasförmiger Anteil des Arbeitsmediums befindet. Insbesondere kann das fluide Arbeitsmedium in der Kavität nach dem Wirkprinzip eines Wärmerohrs zirkulierbar sein. Dazu kann die Kavität einen Verdampferbereich und einen Kondensatorbereich aufweisen. Dabei kann das Arbeitsmedium in dem Verdampferbereich unter Aufnahme von Wärme vom flüssigen in den gasförmigen Aggregatzustand übergehen und in dem Kondensatorbereich unter Abgabe von Wärme vom gasförmigen in den flüssigen Aggregatzustand übergehen. Entsprechend ist dem Verdampferbereich ein zu entwärmender Teil der Begrenzungsfläche der Kavität zugeordnet, und dem Kondensatorbereich ist ein zu erwärmender Teil der Begrenzungsfläche zugeordnet. Insgesamt wird also ein Wärmetransport vom Verdampferbereich zum Kondensatorbereich bewirkt. Der Transport von kondensiertem Arbeitsmedium vom Kondensatorbereich zum Verdampferbereich kann durch eine in der Kavität angeordnete Kapillarstruktur kapillar unterstützt werden. Eine solche Kapillarstruktur lässt sich besonders gut mit additiven Herstellungsmethoden definiert erzeugen. Vorteilhaft ist diese Kapillarstruktur so ausgestaltet, dass sie zumindest in Teilbereichen der Kavität eine oder mehrere durchgehende Verbindungen zwischen dem Kondensatorbereich und dem Verdampferbereich bildet. Umgekehrt wird verdampftes Arbeitsmedium kontinuierlich vom Verdampferbereich zum Kondensorbereich transportiert. Dieser Transport findet in einem Gasraum statt, welcher durch einen Teilbereich der innenliegenden Kavität gebildet ist. Dieser Teilbereich wird auch als Dampfkammer (englisch: "Vapor Chamber") bezeichnet. Allgemein muss die Kavität bei der Ausgestaltung als Wärmerohr-System nicht zwingend rohrförmig sein. Auch das Vorliegen einer länglichen Form ist nicht notwendig. Der Begriff "Wärmerohr" wird hier nur verwendet, weil er das Wirkprinzip der kontinuierlichen Wärmeübertragung zwischen einem Kondensorbereich und einem Verdampferbereich unter Nutzung der Verdampfungsenthalpie des zirkulierenden Arbeitsmediums beschreibt.

Als Arbeitsmedium für ein solches Wärmerohr-System können insbesondere ein oder mehrere der folgenden Stoffe zum Einsatz kommen, abhängig vom relevanten Temperaturbereich: So kann das Arbeitsmedium für einen Temperaturbereich des Bauteils unterhalb von 0 °C einen oder mehrere der folgenden Stoffe umfassen: Ethan, Krypton, Methan, Sauerstoff, Argon, Xenon, Stickstoff, Neon, Wasserstoff und Helium. Für einen Temperaturbereich zwischen 0 °C und 50 °C kann es einen oder mehrere der folgenden Stoffe umfassen: Wasser, Aceton, Kohlenstoffdioxid, Ammoniak, Methanol, Methylamin, Pentan, Propylen, Ethan, organische, bevorzugt aliphatische Carbonsäureester, fluorierte Kohlenwasserstoffe, Fluorchlorkohlenwasserstoffe und andere übliche Kältemittel. Für einen mittleren Temperaturbereich zwischen 50 °C und 150 °C kann es vorteilhaft einen oder mehrere der folgenden Stoffe umfassen: Aceton, Wasser, Methanol, Toluol, Ammoniak, organische, bevorzugt höhere aliphatische Carbonsäureester, fluorierte Kohlenwasserstoffe, Fluorchlorkohlenwasserstoffe und andere übliche Kältemittel. Für einen hohen Temperaturbereich zwischen 150 °C und 350 °C kann es vorteilhaft einen oder mehrere der folgenden Stoffe umfassen: Naphthalin, Wasser, Toluol, Quecksilber sowie weitere übliche Hochtemperaturkühlmittel mit einem hohen Dampfdruck wie beispielsweise langkettige aliphatische oder aromatische Ether und Ketone. Für noch höhere Temperaturbereiche können z.B. Schwefel, Cäsium, Kalium, Rubidium, Natrium, Lithium, Calcium, Blei, Silber und/oder Indium zum Einsatz kommen. Abgesehen von dem Arbeitsmedium ist es vorteilhaft, wenn die Kavität möglichst frei von anderen Stoffen ist, um einen hohen Wirkungsgrad des Wärmerohrsystems zu erreichen.

Es sind jedoch im Rahmen dieser Ausführungsvariante mit einer Medienkammer auch andere Anwendungen denkbar und vorteilhaft, wie z.B. in einem Latentwärmespeicher. Auch hier erfolgt beim Betrieb des Bauteils typischerweise ein Phasenwechsel des Arbeitsmediums, wobei dem Bauteil zugeführte thermische Energie als Umwandlungsenthalpie des Phasenübergangs gespeichert werden kann. Entsprechend kann die derart gespeicherte Energie beim umgekehrten Phasenübergang freigesetzt werden. Bei dem Phasenübergang kann es sich insbesondere um einen Übergang zwischen fester und flüssiger Phase handeln. Alternativ können auch Übergänge zwischen flüssiger und gasförmiger Phase oder zwischen fester und gasförmiger Phase genutzt werden.

Bei den Ausführungsformen, bei denen die Kavität als Medienkammer ausgestaltet ist, ist es allgemein vorteilhaft, wenn die Befüllung der Kavität mit dem Arbeitsmedium mittels einer Befüllungskanüle erfolgt. Über eine solche Befüllungskanüle kann das Arbeitsmedium in fluider Form, also als Gas und/oder als Flüssigkeit eingefüllt werden. Eine solche Befüllungskanüle kann nach dem Evakuieren in Schritt b) und vor dem Verschließen in Schritt c) in die Öffnung der Kavität eingeführt werden. Nach diesem Einführen findet die Befüllung statt, und die Befüllungskanüle kann vor dem Verschließen in Schritt c) wieder aus der Öffnung entfernt werden. Alternativ zu einer solchen in die Öffnung ragenden Befüllungskanüle kann die Befüllung jedoch auch durch ein Einspritzen bzw. Eintropfen von Flüssigkeit in die Öffnung erfolgen und/oder durch ein Einleiten des Arbeitsmediums in Gasform, z.B. über eine Gaszuleitung, die nicht in die Öffnung hineinragt.

Bei der Befüllung mit einem Arbeitsmedium ist es allgemein vorteilhaft, wenn währenddessen das Bauteil zumindest in Teilbereichen auf eine Temperatur gekühlt wird, bei der eingefülltes gasförmiges Arbeitsmedium innerhalb der Kavität kondensiert und/oder bei der eingefülltes flüssiges Arbeitsmedium innerhalb der Kavität ausfriert. Dies kann beispielsweise durch Eintauchen eines von dem Verschlussbereich abgewandten Teilbereichs des Bauteils in flüssigen Stickstoff, flüssiges Neon, flüssigen Wasserstoff oder flüssiges Helium erreicht werden. Bei dieser Variante kann auch während der Befüllung weiter Vakuum gesaugt werden und somit die Verunreinigung der Kavität mit Fremdgasen vorteilhaft verringert werden. Allgemein besonders vorteilhaft ist das Einfüllen des Arbeitsmediums in flüssiger Form. Je nach Art des Mediums muss es dabei im Vergleich zur Raumtemperatur entweder gekühlt werden (z.B. bei Stickstoff, Krypton, Xenon, Argon und anderen Tieftemperatur-Arbeitsmedien) oder erwärmt werden (z.B. bei Naphthalin, Natrium, Schwefel und anderen Hochtemperatur-Arbeitsmedien) .

Vorteilhaft kann das Arbeitsmedium vor der Befüllung entgast werden, so dass gelöste Fremdgase vor dem Einlass in die Kavität weitgehend entfernt werden. Alternativ oder zusätzlich kann die Kavität vor dem Befüllen ausgeheizt und/oder mit dem Arbeitsmedium oder einem anderen Spülgas (z.B. Argon, Helium, Wasserstoff und/oder Stickstoff) gespült oder wechselweise evakuiert und begast werden, um das Vorliegen von Fremdstoffen zu verringern.

Gemäß einer allgemein vorteilhaften Ausgestaltung des Verschlusses kann die Öffnung der Begrenzungswand eine konische Form aufweisen, und das darin eingesetzte Verschlusselement kann eine dazu passende konische Form aufweisen. Diese Variante ist besonders vorteilhaft, um bei einem Rotations-Reibschweißverfahren eine gleichmäßige Erwärmung eines ausgedehnten Fügebereichs zu erzielen. Zweckmäßig entspricht die Rotationsachse beim Rotations-Reibschweißen dann der Symmetrieachse des Verschlusselements und auch der Symmetrieachse der konischen Öffnung. Allgemein können bei dieser Ausführungsform die in der bereits weiter oben zitierten Veröffentlichung von Z. Sun et al. beschriebenen vorteilhaften geometrischen Parameter und sonstigen Prozessparameter zum Einsatz kommen. Der Begriff der zueinander "passenden konischen Form" soll dabei so verstanden werden, dass das konische Verschlusselement unter axialer Fortbewegung in die konische Öffnung der Begrenzungswand eingesetzt werden kann. Die Durchmesser der Öffnung und des Verschlusselements sollen also so ähnlich sein, dass dies möglich ist und auch die Kegelwinkel sollten in einem ähnlichen Bereich liegen. Allerdings müssen Durchmesser und Kegelwinkel nicht vollkommen identisch sein, da durch eine plastische Verformung der beiden zu fügenden Teile während des Reibschweißens auch eine verbesserte Passung erreicht werden kann. Wesentlich ist nur, dass das Verschlusselement nach dem Reibschweiß-Schritt passförmig in der Öffnung sitzt und dass die beiden Fügepartner dann zumindest in einem Teilbereich eine ringförmige gasdichte stoffschlüssige Verbindung miteinander ausbilden. Um die Vorteile der Erfindung zu erreichen, ist eine konische Ausgestaltung von Verschlusselement und Öffnung jedoch nicht zwingend erforderlich. So kann z.B. ein konisches Verschlusselement in ein zylindrisches Loch eingesetzt werden, wie auch in der Veröffentlichung von Z. Sun et al. beschrieben. Umgekehrt kann ein zylindrisches Verschlusselement in ein konisches Loch eingesetzt werden. Alternativ ist es auch denkbar und unter Umständen vorteilhaft, wenn ein zylindrisches Verschlusselement in ein zylindrisches Sackloch eingesetzt wird. In diesem Fall kann das Sackloch z.B. einen Bodenbereich mit einem engeren Durchgangsloch aufweisen, so dass insgesamt eine Öffnung zum Evakuieren und ggf. Befüllen mit Arbeitsmedium vorliegt, welche in Schritt c) mit der Stirnseite des zylindrischen Verschlusselements abgedichtet wird.

Gemäß einer ersten Ausgestaltungsvariante für die Art des Einsetzens kann das Verschlusselement von einer der Kavität abgewandten Seite der Begrenzungswand aus in die Öffnung eingesetzt werden, mit anderen Worten von einer Außenseite der Kavität aus. Diese Variante kann vorteilhaft sein, weil diese Außenseite für eine Reibschweiß-Maschine leichter zugänglich ist.

Alternativ kann das Verschlusselement jedoch auch von einer der Kavität zugewandten Seite der Begrenzungswand aus in die Öffnung eingesetzt werden, mit anderen Worten von einer Innenseite der Kavität aus. Diese Art des Verschließens mit einem innenliegenden Stöpsel durch Reibschweißen wird in der Fachwelt zum Teil auch mit dem englischen Begriff "Friction Pull Plug Welding" bezeichnet. Ein solches innenliegendes Verschlusselement kann bei dem erfindungsgemäßen Verfahren beispielsweise zusammen mit der Begrenzungswand (und ggf. weiteren Teilelementen des Bauteils) in einem gemeinsamen Verfahrensschritt additiv hergestellt werden. Es kann z.B. bei der additiven Herstellung über sogenannte Sollbruchstege im Inneren der Kavität mit den benachbarten Bereichen der Begrenzungswand verbunden sein. Nach einem Brechen dieser Sollbruchstege kann das innenliegende Verschlusselement in axialer Richtung von innen in die Öffnung gezogen werden, so dass auch bei dieser Variante eine gasdichte Abdichtung erzielt wird. Dieses Heranziehen in die Öffnung kann beispielsweise mit einem zusätzlichen Einspannelement erreicht werden, welches fest mit dem rotationssymmetrischen Verschlusselement verbunden ist und in axialer Richtung nach außen durch die Öffnung ragt, um für das Verschließen in eine Reibschweiß-Maschine eingespannt zu werden.

Allgemein und unabhängig von der Richtung des Einsetzens und der sonstigen Ausgestaltung des Verschlusselements kann dieses mechanisch fest mit einem Verbindungselement verbunden sein, über das es zur Ausführung von Schritt c) mit einer Rotationsvorrichtung einer Rotations-Reibschweißmaschine verbunden wird. Bei dem Verbindungselement kann es sich z.B. um ein Einspannelement für ein Mehrbackenfutter einer Maschine handeln oder es kann einen Teil eines Bajonettverschlusses ausbilden. Alternativ kann das Verbindungselement ein Gewinde oder ein anderes Element zur formschlüssigen Verbindung mit der Rotationsvorrichtung aufweisen. Dieses Verbindungselement muss jedenfalls nicht die rotationssymmetrische Form des übrigen Verschlusselements aufweisen.

Allgemein vorteilhaft kann das Herstellen der stoffschlüssigen Verbindung gemäß Schritt c) innerhalb einer gegen die äu-ßeren Umgebung gasdicht gekapselten Prozesskammer durchgeführt werden. Eine solche gekapselte Prozesskammer erleichtert das Evakuieren gemäß Schritt b) und das anschließende Verschließen gemäß Schritt c), ohne dass unterwünschte Fremdgase in die Kammer gelangen. Dies gilt unabhängig davon, ob zwischen dem Evakuieren und dem Verschließen ein Arbeitsmedium in die Kavität eingefüllt wird oder nicht. Zum Evakuieren gemäß Schritt b) kann die gekapselte Prozesskammer mit einem Vakuumanschluss zum Saugen von Vakuum ausgestattet sein.

Gemäß einer besonders bevorzugten Ausgestaltung dieser Ausführungsform kann die gekapselte Prozesskammer die Rotationsvorrichtung einer Reibschweißmaschine enthalten und mit einer ringförmig um die Öffnung umlaufenden Dichtung an eine Außenseite der Begrenzungswand angedockt sein. Mit anderen Worten ist die gekapselte Prozesskammer im Verschlussbereich auch durch die Begrenzungswand der Kavität begrenzt. Die Prozesskammer ist zwar (auch mittels der umlaufenden Dichtung) gasdicht gegen die äußere Umgebung gekapselt, aber über die Öffnung fluidisch mit dem Innenraum der Kavität verbunden. Die umlaufende Dichtung kann beispielsweise eine Elastomerdichtung und/oder ein Hochvakuumdichtfett umfassen. Die gekapselte Prozesskammer kann beispielsweise wenigstens teilweise durch einen Faltenbalg begrenzt sein, um eine Längenänderung in axialer Richtung zu ermöglichen, wenn die Rotationsvorrichtung zusammen mit dem Verschlusselement in Schritt c) auf die Öffnung zu bewegt wird. Alternativ zu dieser Ausführungsform mit einer Kapselung der Prozesskammer gegen die Begrenzungswand der Kavität kann jedoch auch eine außenliegende Prozesskammer zum Einsatz kommen, welche das Bauteil und zumindest die Rotationsvorrichtung der Reibschweißmaschine vollständig einschließt.

Nachfolgend wird die Erfindung anhand einiger bevorzugter Ausführungsbeispiele unter Bezugnahme auf die angehängten Zeichnungen beschrieben, in denen:
Figur 1 eine schematische Schnittdarstellung eines Bauteils nach einem ersten Beispiel der Erfindung zeigt,
Figur 2 ein Bauteil nach einem zweiten Beispiel der Erfindung zeigt,
Figur 3 eine Detailansicht eines Verschlussbereichs eines solchen Bauteils zeigt,
Figuren 4 bis 8 verschiedene Stadien des Verfahrens im Verschlussbereich des Bauteils zeigen und
Figuren 9 und 10 ähnliche Ansichten für eine alternative Ausführung eines solchen Verschlussbereichs zeigen.

In den Figuren sind gleiche oder funktionsgleiche Elemente mit gleichen Bezugszeichen versehen.

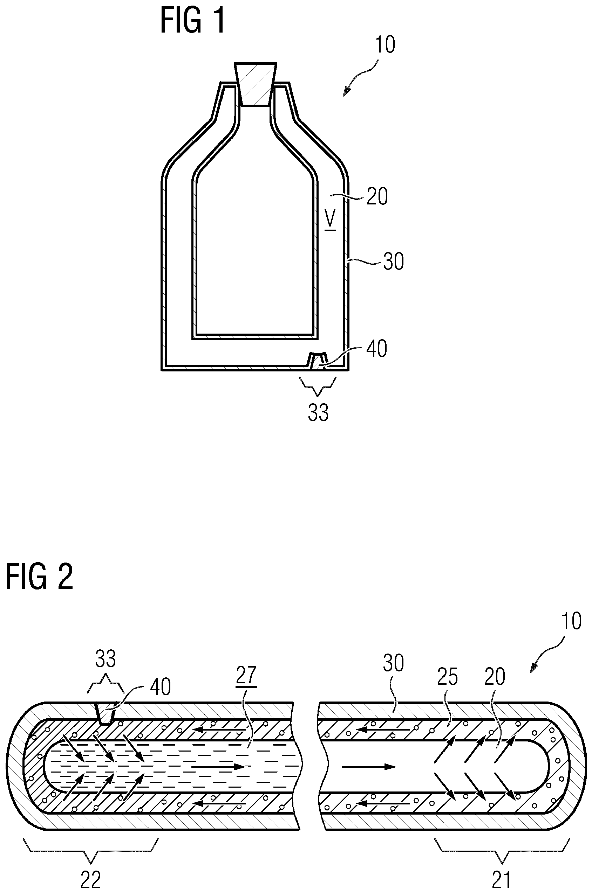

In Figur 1 ist ein Bauteil 10 nach einem ersten Beispiel der Erfindung im schematischen Längsschnitt gezeigt. Der Grundkörper dieses Bauteils 10 ist im Wesentlichen durch eine durchgehende Begrenzungswand 30 gebildet, welche eine innenliegende Kavität 20 umschließt. Bei dieser Kavität handelt es sich um eine Vakuumkammer, die im fertigen Zustand des Bauteils 10 evakuiert ist. Bei dem Vakuum V kann es sich beispielsweise um ein Grobvakuum oder Feinvakuum handeln. Im gezeigten Beispiel ist das Bauteil 10 als Isoliergefäß dargestellt. Dies soll jedoch nur stellvertretend für viele andere Bauteile stehen, bei denen eine evakuierte Kavität zum Einsatz kommt, beispielsweise zur thermischen Isolation, aber auch für andere Zwecke. Zumindest die Begrenzungswand 30 des Bauteils ist aus einem metallischen Material gebildet und durch ein additives Herstellungsverfahren hergestellt, beispielsweise durch ein pulverbettbasiertes Verfahren. Um die Kavität bei der Herstellung zu evakuieren und danach dauerhaft gasdicht abzuschließen, weist das Bauteil 10 im unteren Bereich einen Verschlussbereich 33 auf. Hier befindet sich eine Öffnung in dem Wandelement 30, in das ein Verschlusselement 40 eingesetzt ist. Vor dem Einsetzen des Verschlusselements wurde die Kavität evakuiert, und das Einsetzen hat insbesondere unter Vakuum stattgefunden. Zwischen der Begrenzungswand 30 und dem eingesetzten Verschlusselement 40 wurde eine stoffschlüssige Verbindung durch Reibschweißen hergestellt, wie im Folgenden noch ausführlicher beschrieben wird.

In Figur 2 ist ein Bauteil 10 nach einem zweiten Beispiel der Erfindung gezeigt. Auch dieses Bauteil 10 ist im Wesentlichen in einem additiven Herstellungsverfahren erzeugt und aus einem metallischen Material gebildet. Es weist ebenfalls eine Begrenzungswand 30 auf, welche eine innenliegende Kavität 20 umschließt. Auch in diesem Beispiel wurde die Kavität 20 nach der additiven Herstellung des Grundkörpers evakuiert, aber anschließend wurde hier ein Arbeitsmedium 27 in die Kavität 20 eingefüllt, bevor in einem Verschlussbereich 33 ein Verschlusselement 40 in die Begrenzungswand 30 eingesetzt wurde und durch Reibschweißen stoffschlüssig mit dieser verbunden wurde. Das Arbeitsmedium 27 ist in diesem Beispiel ein fluides Arbeitsmedium eines Wärmerohr-Systems, welches beim Betrieb des Bauteils 10 kontinuierlich zwischen einem flüssigen und einem gasförmigen Zustand wechselt. Hierzu weist das Bauteil einen Kondensatorbereich 21 auf, in welchem das Arbeitsmedium 27 kondensiert und einen Verdampferbereich 22, in welchem das Arbeitsmedium 27 verdampft. Das verdampfte Arbeitsmedium 27 wird dabei im innenliegenden Bereich der Kavität zum Kondensatorbereich 21 transportiert und das kondensierte Arbeitsmedium 27 wird durch eine an die Begrenzungswand 30 angrenzende und innerhalb der Kavität 20 liegende Kapillarstruktur 25 kapillar zum Verdampferbereich 22 zurücktransportiert. Ein Bauteil mit einem solchen Wärmerohr-System muss nicht zwingend die dargestellte längliche Form aufweisen. Weiterhin steht auch hier das gezeigte Beispiel nur stellvertretend für eine Klasse von vielfältigen Bauteilen, bei welchen sich ein Arbeitsmedium 27 innerhalb der auf die erfindungsgemäße Weise gasdicht verschlossenen Kavität 20 befindet.

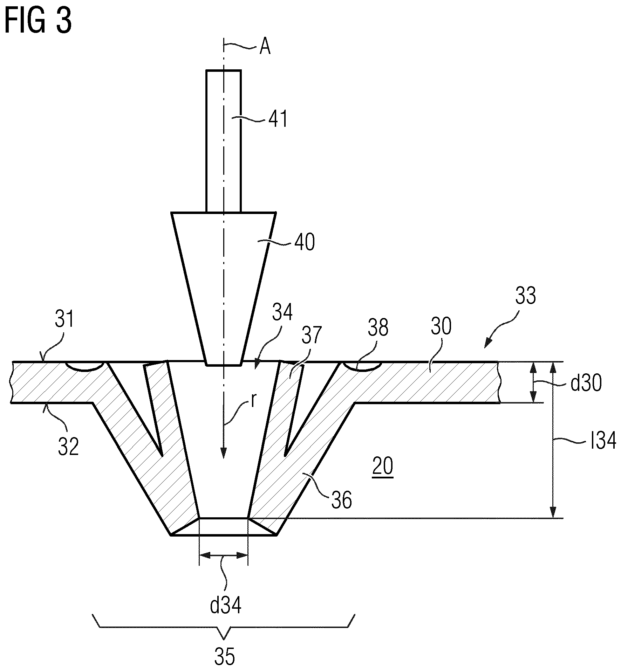

In Figur 3 ist eine Detailansicht des Verschlussbereichs 33 eines solchen Bauteils 10 gezeigt, welches ebenfalls eine Kavität 20 aufweist, die ähnlich wie beim Beispiel der Figur 1 evakuiert sein kann oder ähnlich wie beim Beispiel der Figur 2 mit einem Arbeitsmedium befüllt sein kann. Bei der hier dargestellten Ausführung des Verschlussbereichs 33 weist die additiv hergestellte Begrenzungswand 30 eine Öffnung 34 auf, welche insgesamt konisch geformt ist und einen Innendurchmesser 34 aufweist. In diesem Beispiel ist die konische Form so, dass sich die Öffnung 34 zur Außenseite 31 des Wandelements hin aufweitet. Die axiale Länge 134 der Öffnung 34 ist in diesem Beispiel größer als die Wandstärke d30 der Begrenzungswand 30 in den übrigen Bereichen. Um dies zu erreichen, weist die Begrenzungswand 30 im Verschlussbereich 33 eine Öffnungstülle 35 auf, welche in diesem Beispiel relativ komplex geformt ist und einen inneren Kragen 37 sowie einen äu-ßeren Kragen 36 aufweist. Eine solche Ausgestaltung ist vorteilhaft für die Ausbildung einer gleichmäßigen Wärmeeintragszone in dem inneren Kragen 37, welcher durch Reibschwei-ßen mit dem einzusetzenden Verschlusselement 40 verbunden wird. Dieses Verschlusselement 40 ist hier schematisch in einer Position kurz vor dem Einsetzen in die Öffnung 34 gezeigt. Sowohl das Verschlusselement 40 als auch die Begrenzungswand 30 sind aus einem metallischen Material gebildet. Auch das Verschlusselement ist rotationssymmetrisch und weist eine konische Form auf. Die Form und Größe von Verschlusselement 40 und Öffnung 34 sind zumindest so zueinander passend ausgestaltet, dass das Verschlusselement 40 in die Öffnung eingesetzt werden kann und beim Reibschweißen mit der umgebenden Begrenzungswand 30 (hier insbesondere deren innerem Kragen 37) eine gasdichte Verbindung ausbilden kann. Die Symmetrieachse des Verschlusselements 40 ist hier mit A bezeichnet, und sie entspricht der Symmetrieachse der Öffnung. Um diese Achse wird das Verschlusselement 40 auch beim Reibschweißen rotiert. Um dies zu ermöglichen, ist das Verschlusselement 40 mechanisch fest mit einem Einspannelement 41 verbunden. Es kann z.B. einstückig in dieses Einspannelement 41 übergehen. Über dieses Einspannelement 41 kann das Verschlusselement 40 z.B. in ein Mehrbackenfutter einer Reibschweiß-Maschine eingespannt werden. Hierzu kann das Einspannelement 41 beispielsweise die Querschnittsform eines Dreiecks, eines Vierecks oder eines Sechsecks aufweisen. Um eine Reibschweiß-Verbindung zu erzeugen, wird das Verschlusselement 40 also um die Achse A rotiert und dabei entlang der Vorschubrichtung r in die Öffnung 34 hineinbewegt. Nach der Berührung und während des Rotierens wird eine axiale Anpresskraft ausgeübt, wodurch es zur Freisetzung von Reibungswärme und zur Plastifizierung der beteiligten Materialen im Fügebereich kommt. Nachdem die Rotation beendet wird, wird die Anpresskraft verstärkt, und die Fügepartner 37 und 40 gehen hier eine stoffschlüssige Verbindung ein. Dieser Vorgang entspricht im Wesentlichen dem Reibschweiß-Verfahren, wie er in der oben erwähnten Veröffentlichung von Z. Sun et al. beschrieben ist. Die Ausgestaltung mit einer in axialen Richtung verlängerten Öffnungstülle 35 ist dabei allgemein optional. Die Begrenzungswand 30 kann z.B. alternativ im Verschlussbereich mit einer einfachen konischen Ausnehmung versehen sein.

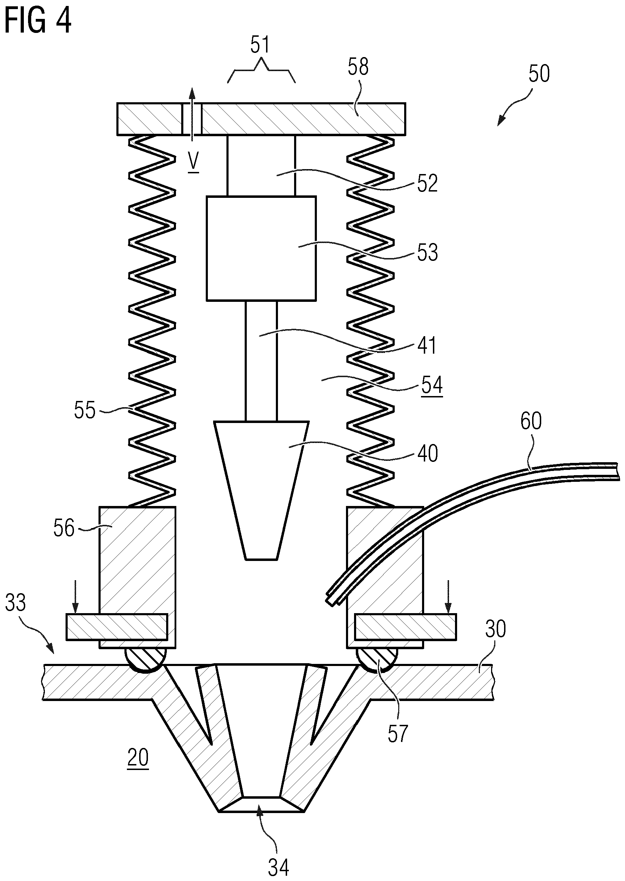

Der Vorgang des Reibschweißens zur Verbindung des Verschlusselements 40 mit der Begrenzungswand 30 wird im Zusammenhang mit den folgenden fünf Figuren noch näher erläutert. So ist in Figur 4 ein Zustand gezeigt, bei dem das Verschlusselement 40 über das zugehörige Einspannelement 41 in eine Rotationsvorrichtung 51 einer Reibschweißmaschine 50 eingespannt ist. Diese Rotationsvorrichtung 51 weist einen Motor 52 auf, mit dem die Rotation bewirkt werden kann, und eine mit dem Motor 52 verbundene Einspannvorrichtung 53, in welche das Einspannelement 41 eingespannt ist. Somit kann das Verschlusselement 40 in die für das Reibschweißen erforderliche Rotation um seine Symmetrieachse A versetzt werden. Um die Kavität 20 des Bauteils vor und gegebenenfalls auch während des Schweißvorgangs zu evakuieren, weist die Reibschweißmaschine 50 zusätzlich eine Prozesskammer 54 auf, welche gegen die äußere Umgebung gasdicht abgeschlossen werden kann. Hierzu ist ein fester unterer Gehäuserand 56 dieser Prozesskammer 54 z.B. über einen Dichtring 57 gasdicht an die Außenseite der Begrenzungswand 30 des Bauteils angedockt. Der Dichtring 57 umgibt dabei die Öffnung 34 und liegt passförmig in der in Figur 3 erkennbaren Dichtungsrinne 38 der Begrenzungswand 30. Um das Verschlusselement 40 in axialer Richtung auf die Kavität 20 zu bewegen zu können, ist die Prozesskammer 54 in diesem Beispiel seitlich durch einen Faltenbalg 55 begrenzt, dessen axiale Länge verändert werden kann, ohne dabei die gasdichte Kapselung zu stören. Auf der von der Kavität 20 abgewandten Stirnseite ist die Prozesskammer 54 von einer Deckplatte 58 begrenzt. In diesem Bereich kann ein hier nicht näher dargestellter Vakuumanschluss ausgebildet sein, um das Innere der Prozesskammer 54 und entsprechend auch die fluidisch mit ihr verbundene Kavität 20 unter Vakuum V setzen zu können, entsprechend Schritt b) des erfindungsgemäßen Verfahrens.

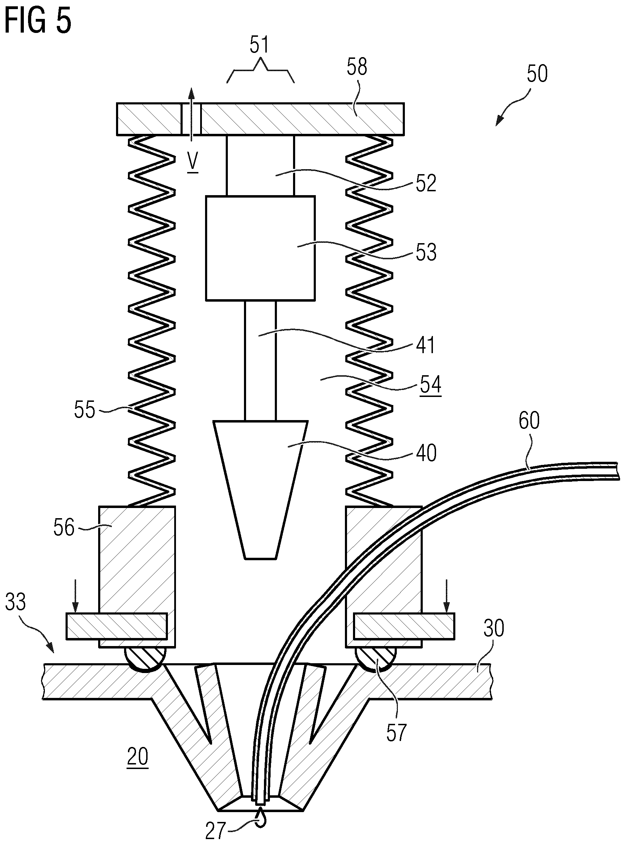

Beim Beispiel der Figur 4 ist die Reibschweißmaschine 50 außerdem mit einer optionalen Befüllungskanüle 60 versehen, welche allerdings nur zum Einsatz kommt, wenn die Kavität 20 vor dem Verschließen mit einem Arbeitsmedium befüllt werden soll. Dieser optionale Zwischenschritt ist in Figur 5 dargestellt. Gezeigt ist ein Zustand, bei dem die Befüllungskanüle temporär in die Öffnung der Begrenzungswand 30 eingeführt ist und somit in das Innere der Kavität 20 hineinragt. Die Befüllungskanüle ist vakuumdicht gegen den Gehäuserand 56 abgedichtet und kann in dieser Dichtung bewegt werden. Das Arbeitsmedium 27 kann beispielsweise in flüssiger Form aus der Befüllungskanüle 60 in die Kavität geleitet werden.

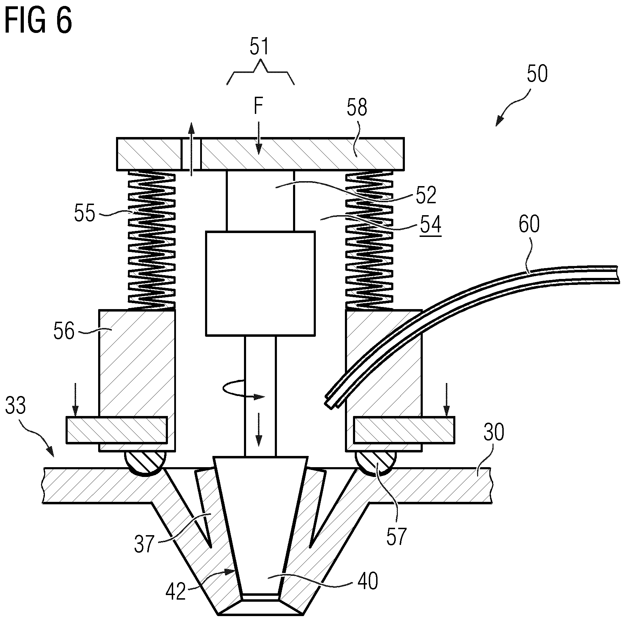

In Figur 6 ist ein Zustand gezeigt, bei dem die optionale Befüllungskanüle 60 wieder aus der Öffnung zurückgezogen wurde und stattdessen das Verschlusselement 40 in die Öffnung eingesetzt wurde. Hierzu wurde das Verschlusselement 40 axial auf die Kavität 20 zu bewegt, was mit einer Verkürzung des Faltenbalgs 55 in axialer Richtung einherging. Das Verschlusselement 40 wird nun unter Rotation um seine Symmetrieachse mittels Reibschweißens mit dem inneren Kragen 37 des Wandelements 30 verbunden. Dabei wird mit der Reibschweißmaschine eine axiale Anpresskraft F auf das Verschlusselement 40 ausgeübt. Anschließend wird die Drehung gestoppt und die Anpresskraft F weiter erhöht, bis die Schweißverbindung fertig ausgebildet ist.

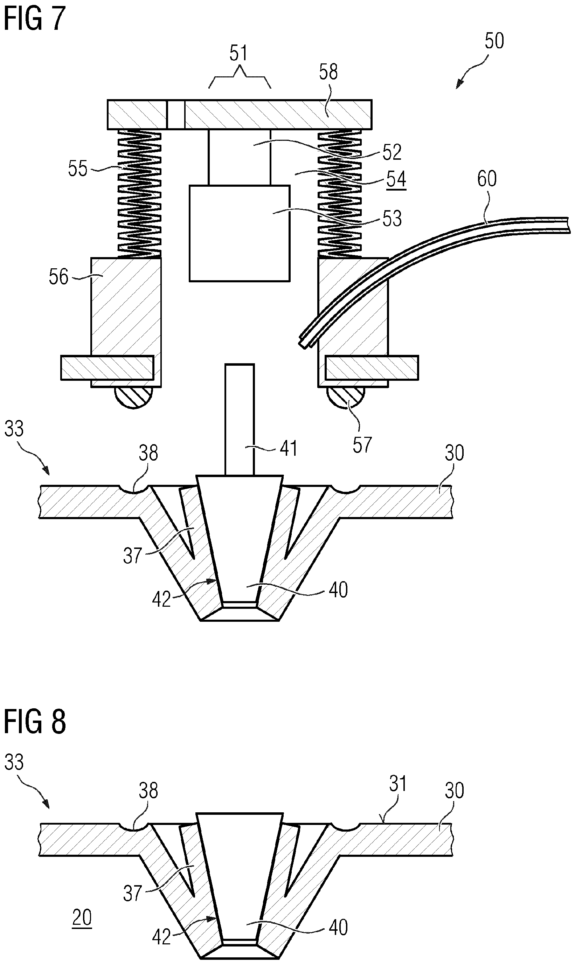

In Figur 7 ist ein Zustand nach dem Ausbilden der gasdichten Schweißverbindung 42 zwischen dem Verschlusselement 40 und der Begrenzungswand 30 gezeigt. Die Reibschweißmaschine ist in diesem Zustand bereits von der Außenseite dieser Begrenzungswand 30 abgedockt worden, und das Einspannelement 41, welches noch mit dem Verschlusselement 40 verbunden ist, wurde aus der Einspannvorrichtung 53 entfernt. In Figur 8 ist schließlich der fertige Zustand des Bauteils in seinem Verschlussbereich 33 gezeigt: Hier ist das Einspannelement 41 inzwischen entfernt worden und das Verschlusselement 40 ist so abgeschliffen worden, dass es im Wesentlichen bündig mit der umgebenden Begrenzungswand 30 abschließt.

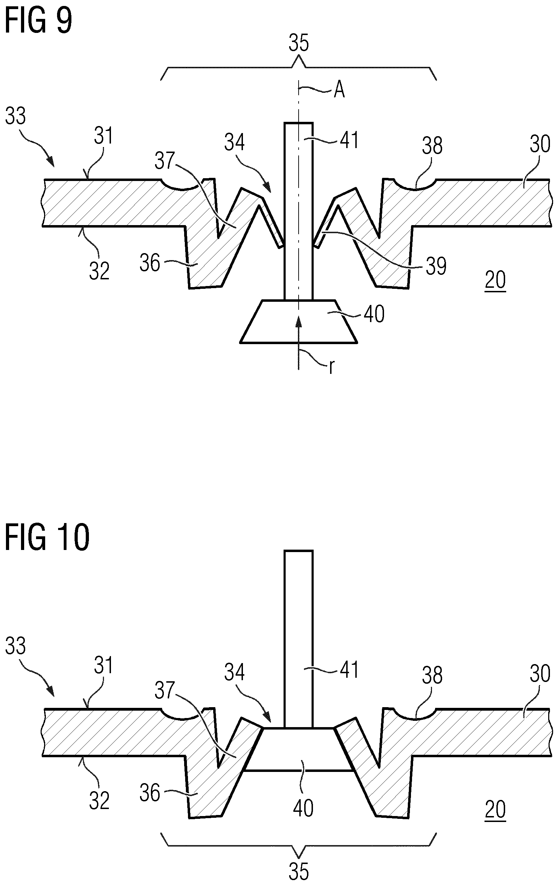

In den Figuren 9 und 10 sind zwei Stadien des Herstellungsverfahrens für eine alternative Ausgestaltung eines solchen Verschlussbereichs 33 gezeigt. Auch bei diesem Beispiel sind sowohl die Öffnung 34 der Begrenzungswand 30 als auch das einzusetzende Verschlusselement 40 konisch geformt. Im Unterschied zum vorhergehenden Beispiel weitet sich die Öffnung 34 jedoch zur Innenseite 32 der Kavität 20 hin auf, und entsprechend wird das Verschlusselement 40 von der Kavität aus in die Öffnung eingesetzt. Bei dem in Figur 9 gezeigten Zustand ist das Verschlusselement 40 noch nicht in die Öffnung 34 eingesetzt worden. Stattdessen ist es noch über mehrere Sollbruchstege 39 mit dem inneren Kragen 37 der Öffnungstülle 35 verbunden. Die Begrenzungswand 30 (mit den verschiedenen Teilelementen der Öffnungstülle 35) und das Verschlusselement 40 und das damit verbundene Einspannelement 41 sind in diesem Beispiel in einem gemeinsamen Verfahrensschritt zusammen additiv hergestellt worden. Sie bilden hier zusammen einen monolithisch ausgebildeten Körper. Erst durch das Aufbrechen der Sollbruchstege 39 werden Verschlusselement 40 und Begrenzungswand 30 voneinander getrennt. Vor der Auftrennung kann auch hier optional eine Befüllungskanüle durch einen Zwischenraum zwischen den Sollbruchstegen in die Öffnung 34 der Kavität 20 eingeführt werden, um die Kavität mit einem Arbeitsmedium zu befüllen, falls dies für die Anwendung erforderlich ist. Auch im Übrigen kann die Ausbildung des Verschlusses in analoger Weise durchgeführt werden wie im Zusammenhang mit den Figuren 4 bis 8 beschrieben. Figur 10 zeigt dabei ein Prozessstadium, bei dem das Verschlusselement bereits durch Reibschweißen mit dem umgebenden Wandelement 30 gasdicht verbunden ist. Nur das Einspannelement 41 ist hier noch nicht entfernt worden. Ein wesentlicher Vorteil bei dem Einsetzen des Verschlusselements von der Innenseite der Kavität ist, dass die axiale Anpresskraft für den Schweißvorgang hier eine Zugkraft ist. Entsprechend kann diese Zugkraft gegen eine temporär angebrachte außenliegende Ringscheibe abgestützt werden, und die Begrenzungswand 30 muss der mechanischen Belastung durch die notwendige Zugkraft nicht alleine standhalten können. Dies kann insbesondere beim Vorliegen einer verhältnismäßig dünnen additiv gefertigten Begrenzungswand von Vorteil sein.

Die Anmelderin weist an dieser Stelle darauf hin, dass unabhängig vom grammatikalischen Geschlecht eines bestimmten personenbezogenen Begriffs stets Personen mit männlicher, weiblicher und anderer Geschlechteridentität mit umfasst sein sollen.

### Bezugszeichenliste

- 10: Bauteil
- 20: Kavität
- 21: Kondensatorbereich
- 22: Verdampferbereich
- 25: Kapillarstruktur
- 27: Arbeitsmedium
- 30: Begrenzungswand
- 31: Außenseite
- 32: Innenseite
- 33: Verschlussbereich
- 34: Öffnung
- 35: Öffnungstülle
- 36: äußerer Kragen
- 37: innerer Kragen
- 38: Dichtungsrinne
- 39: Sollbruchsteg
- 40: Verschlusselement
- 41: Einspannelement
- 42: Schweißverbindung
- 50: Reibschweißmaschine
- 51: Rotationsvorrichtung
- 52: Motor
- 53: Einspannvorrichtung
- 54: Prozesskammer
- 55: Faltenbalg
- 56: Gehäuserand
- 57: Dichtring
- 58: Deckplatte
- 60: Befüllungskanüle
- A: Rotationsachse
- d30: Wandstärke der Begrenzungswand
- d34: (kleinster) Durchmesser der Öffnung
- F: Anpresskraft
- 134: Länge der Öffnung
- r: Vorschubrichtung
- V: Vakuum

## Patentansprüche

1. Verfahren zur Herstellung eines Bauteils (10) mit einer gasdicht abgeschlossenen Kavität (20), umfassend die folgenden, in dieser Reihenfolge nacheinander ausgeführten Schritte:
a) Herstellen wenigstens einer Begrenzungswand (30) der Kavität (20) mittels eines additiven Herstellungsverfahrens, wobei die Begrenzungswand (30) einen Verschlussbereich (33) mit einer rotationssymmetrischen Öffnung (34) aufweist,
b) Evakuieren der Kavität (20) über die Öffnung (34),
c) Einsetzen eines rotationssymmetrischen Verschlusselements (40) in die Öffnung (34) und Herstellen einer stoffschlüssigen Verbindung (42) zwischen Verschlusselement (40) und Begrenzungswand (20) durch Reibschweißen, so dass ein dauerhaft gasdichter Verschluss der Kavität (20) gebildet wird.

2. Verfahren nach Anspruch 1, bei welchem die Begrenzungswand (30) aus einem metallischen Material gebildet wird und das Verschlusselement (40) aus einem metallischen Material besteht.

3. Verfahren nach einem der Ansprüche 1 oder 2, bei welchem das in Schritt a) angewandte additive Herstellungsverfahren ein pulverbettbasiertes Verfahren oder ein drahtbasiertes Verfahren oder ein pastenbasiertes Sintermetallverfahren ist.

4. Verfahren nach einem der Ansprüche 1 bis 3, bei welchem die gasdicht abgeschlossene Kavität (20) eine Vakuumkammer ist,
wobei während des Einsetzens des rotationssymmetrischen Verschlusselements (40) in die Öffnung (34) und während des Herstellens der stoffschlüssigen Verbindung (42) zwischen Verschlusselement (40) und Begrenzungswand (30) innerhalb der Kavität (20) ein Vakuum (V) anliegt.

5. Verfahren nach einem der Ansprüche 1 bis 3, bei welchem die gasdicht abgeschlossene Kavität (20) eine Medienkammer ist, wobei nach Schritt b) und vor Schritt c) ein Arbeitsmedium (27) in die Kavität (20) eingefüllt wird.

6. Verfahren nach Anspruch 5, wobei die Befüllung der Kavität (20) mit dem Arbeitsmedium (27) mittels einer Befüllungskanüle (60) erfolgt, welche durch die Öffnung (34) in die Kavität (20) eingeführt wird und vor der Ausführung von Schritt c) wieder aus dieser Öffnung (34) entfernt wird.

7. Verfahren nach einem der Ansprüche 5 oder 6, wobei während der Befüllung mit dem Arbeitsmedium (27) das Bauteil (10) zumindest in Teilbereichen auf eine Temperatur gekühlt wird, bei der das eingefüllte Arbeitsmedium (27) innerhalb der Kavität (20) kondensiert und/oder ausfriert.

8. Verfahren nach einem der vorhergehenden Ansprüche, bei welchem die Öffnung (34) der Begrenzungswand (30) eine konische Form aufweist und das darin eingesetzte Verschlusselement (40) eine dazu passende konische Form aufweist.

9. Verfahren nach einem der Ansprüche 1 bis 8, bei welchem in Schritt c) das Verschlusselement (40) von einer der Kavität (20) abgewandten Seite der Begrenzungswand (30) aus in die Öffnung (34) eingesetzt wird.

10. Verfahren nach einem der Ansprüche 1 bis 8, bei welchem in Schritt c) das Verschlusselement (40) von einer der Kavität (20) zugewandten Seite der Begrenzungswand (30) aus in die Öffnung (34) eingesetzt wird.

11. Verfahren nach einem der vorhergehenden Ansprüche, bei welchem das Verschlusselement (40) mit einem Einspannelement (41) verbunden ist, über das es während der Ausführung von Schritt c) in eine Rotationsvorrichtung (51) einer Reibschweißmaschine (50) eingespannt ist.

12. Verfahren nach einem der vorhergehenden Ansprüche, bei welchem das Herstellen der stoffschlüssigen Verbindung (42) in Schritt c) innerhalb einer gegen die äußere Umgebung gasdicht gekapselten Prozesskammer (54) durchgeführt wird.

13. Verfahren nach Anspruch 12, bei welchem die gekapselte Prozesskammer (54) die Rotationsvorrichtung (51) einer Reibschweißmaschine (50) enthält und mit einer ringförmig um die Öffnung (34) umlaufenden Dichtung (57) an eine Außenseite (31) der Begrenzungswand (30) angedockt ist.

14. Bauteil (10) mit einer gasdicht abgeschlossenen Kavität (20), welche von wenigstens einer Begrenzungswand (30) begrenzt wird,
- wobei zumindest die Begrenzungswand (30) der Kavität (20) mittels eines additiven Herstellungsverfahrens hergestellt ist,
- wobei die Begrenzungswand (30) einen Verschlussbereich (33) mit einer rotationssymmetrischen Öffnung (34) aufweist,
- wobei in diese Öffnung (34) ein rotationssymmetrisches Verschlusselement (40) eingesetzt ist und mit der umgebenden Begrenzungswand (30) durch eine Reibschweiß-Verbindung (42) gasdicht verbunden ist,
- wobei der Innenraum der Kavität (20) entweder evakuiert ist oder mit einem Arbeitsmedium (27) befüllt ist.

15. Computerprogrammprodukt umfassend Befehle, wobei die Befehle einen Computer bei der Ausführung des Computerprogrammprodukts dazu veranlassen, ein Verfahren zur Auslegung eines Bauteils (10) nach Anspruch 14 auszuführen, wobei das Auslegungsverfahren die folgenden Schritte umfasst:
a) Bereitstellung eines physikalischen Modells für das Bauteil (10),
b) Festlegung eines Auslegungs-Parametersatzes mit wenigstens einem variablen geometrischen Auslegungs-Parameter für das Bauteil (10),
c) Festlegung von einem Zielwert für wenigstens eine physikalische Eigenschaft des Bauteils (10),
d) computergestützte Durchführung von wenigstens einer Simulation unter Verwendung des physikalischen Modells, wobei die wenigstens eine physikalische Eigenschaft des Bauteils (10) in Abhängigkeit des Auslegungs-Parametersatzes berechnet wird,
d) Bestimmung von wenigstens einem geeigneten Auslegungs-Parametersatz im Hinblick auf die Erreichung des Zielwertes für die wenigstens eine physikalische Eigenschaft auf Basis der Simulation.
